# EUROPEAN PATENT SPECIFICATION

(11) **EP 2 742 764 B1**
(45) Date of publication and mention of the grant of the patent: **18.02.2015**
(21) Application number: 12816378.9
(22) Date of filing: 12.12.2012
(51) Int. Cl.: H04W 74/00, H04W 74/08

(54) **RANDOM ACCESS MODE FALLBACK IN WIRELESS NETWORKS**
DIREKTZUGRIFFSMODUS-FALLBACK IN DRAHTLOSEN NETZWERKEN
REPRISE DE MODE D'ACCÈS ALÉATOIRE DANS DES RÉSEAUX SANS FIL

(30) Priority: 30.01.2012 US 201261592147 P
(43) Date of publication of application: 18.06.2014
(73) Proprietor: Telefonaktiebolaget L M Ericsson (publ), 164 83 Stockholm (SE)
(72) Inventor: SHI, Nianshan, S-176 74 Järfälla (SE); PRADAS, Jose Luis, S-11622 Stockholm (SE)
(74) Representative: Kühn, Friedrich Heinrich
(86) International application number: PCT/SE2012/051377
(87) International publication number: WO 2013/115698

(56) References cited:
- WO-A1-2009/149760
- GB-A- 2 340 698
- CHINA UNICOM: "Discussion on the mechanisms of fallback to R99 PRACH", 3GPP DRAFT; R2-120763, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 29 January 2012 (2012-01-29), XP050564963, [retrieved on 2012-01-29]
- ERICSSON ET AL: "Fallback to R99 RACH", 3GPP DRAFT; R2-115913_FALLBACKR99_RACH_REL-11_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564356, [retrieved on 2011-11-08]
- NOKIA SIEMENS NETWORKS: "Fallback to R99 RACH", 3GPP DRAFT; R2-115093_FALLBACK_V13, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540950, [retrieved on 2011-10-04]
- HUAWEI ET AL: "Discussions on Solution of Fallback to R99 PRACH", 3GPP DRAFT; R2-114998 DISCUSSIONS ON SOLUTION OF FALLBACK TO R99 PRACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540921, [retrieved on 2011-10-04]
- ERICSSON ET AL: "Fallback to R99 RACH", 3GPP DRAFT; R2-114157_FALLBACKR99_RACH_REL-11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539978, [retrieved on 2011-08-16]

## Description

### TECHNICAL FIELD

The present invention is related generally to wireless communication networks, and is more particularly related to techniques for regulating random access traffic in such networks.

### BACKGROUND

The 3rd-Generation Partnership Project (3GPP) is continuing development of the specifications for the Universal Terrestrial Radio Access Network (UTRAN). More particularly, work is ongoing to improve the end-user experience and performance in Release 11 of those specifications. These efforts include work to improve end-user experience and system performance in the CELL_FACH state.

According to the specifications for the Universal Mobile Telecommunications System (UMTS) developed by 3GPP, a mobile terminal (referred to as a "user equipment" or "UE" in 3GPP terminology) can be in Idle Mode or in Connected Mode. In connected mode, there are four states: URA_PCH, CELL_PCH, CELL_FACH and CELL_DCH. In CELL_FACH state, no dedicated physical channel is allocated to the UE. CELL_FACH is a Radio Resource Control (RRC) state in which the UE is known at the cell level (i.e., it has a cell ID) and has a layer 2 connection, but has no dedicated physical layer resource. Instead, the UE in CELL_FACH state must share common physical layer resources with other users in CELL_FACH state.

In Idle Mode or in CELL_FACH state in Connected Mode, the UE can transmit data using the Physical Random Access Channel (PRACH). In Release 8 of the UMTS standards, uplink data transmissions on the Enhanced Dedicated Channel (E-DCH) in Idle Mode and in CELL_FACH state in Connected Mode were standardized. This feature is known as Enhanced Uplink in CELL_FACH state and Idle Mode. In essence, this enhancement means that the UE does not transmit data on the PRACH when in CELL_FACH state or in Idle Mode, but on E-DCH.

More usually, E-DCH is used as a dedicated channel in CELL_DCH state, in which case a separate resource is allocated for each user. When E-DCH is used in CELL_FACH state, however, the system uses a pool of E-DCH resources that can each be temporarily assigned to a UE in CELL_FACH state. This pool of E-DCH resources is generally referred to as "common E-DCH resources." E-DCH resources are normally managed by the Radio Network Controller (RNC), but the pool of common E-DCH resources is instead managed by the Node B (3GPP terminology for a base station.) Configuration data specifying the E-DCH configurations are broadcasted to UEs in the cell.

The default behavior for a UE is to use PRACH when in Idle Mode or in CELL_FACH state in Connected Mode. If a given cell supports Enhanced Uplink in CELL_FACH state and Idle Mode, then UEs in a given cell can be configured to use E-DCH instead. Thus, the standards specify that a UE that supports Enhanced Uplink in CELL_FACH state and Idle Mode shall transmit on E-DCH while the UE is in Idle Mode or in CELL_FACH state in Connected Mode if the Radio Network Controller (RNC) broadcasts the parameters that are used to configure these transmissions, in the system information blocks. If the Universal Terrestrial Radio Access Network (UTRAN) does not broadcast these parameters, the UE in these modes shall transmit its data on PRACH.

3GPP contribution R2-120763 (author: China Unicom; TSG-RAN WG2 Meeting #77, Dresden, Germany, February 6-10, 2012) and 3GPP contribution R2-115913 (authors: Ericsson, ST-Ericsson; 3GPP TSG-RAN WG2 #76, San Francisco, USA, 14-18 November 2011) discuss mechanisms of fallback to R99 PRACH.

### SUMMARY

There are cases where it would be desirable for the UTRAN to selectively steer uplink traffic over E-DCH or over PRACH. For example, the UTRAN might prefer to route uplink traffic over PRACH in the event of a hardware resource shortage or congestion, or due to operator policies. According to several embodiments of the present invention, a mechanism is introduced to UTRAN so that the Node-B provides an indication to the RNC when the Node-B load is sufficiently high or low. The RNC can decide then to steer all or part of the traffic to PRACH or to the common E-DCH resources.

In some embodiments, one or more of the following processes, steps, and/or mechanisms are used. First, an indicator is introduced for a Node B to indicate whether each of its cells is capable of supporting a new feature: Enhanced CELL_FACH fallback to R99 PRACH functionality. This functionality is referred to as "fallback to PRACH" in the following discussion. Next, lub signaling support to allow the Controlling RNC (CRNC) to set up Events is added. An Event is a defined set of one or more parameters, such as threshold values and time-to-trigger values. When a certain condition remains true (for example, a certain value which is being monitored becomes and remains above/below the signaled threshold) for a period of time (a specified time-to-trigger), the Node-B triggers an Event. The configured thresholds may refer to the load of UEs in a concrete Mode or State, the occupied/available common E-DCH resources, the occupied/available PRACH resources. Alternatively, this could be done via Node B configuration. In addition, new lub signaling is introduced to allow the Node B to notify the CRNC to trigger Enhanced CELL_FACH to fall back to R99 PRACH. This notification occurs when a configured Event is triggered.

Likewise, new lub signaling is introduced so that the Node B can notify the CRNC to return to Enhanced CELL_FACH after having been earlier triggered to fall back to R99 PRACH. Note that instead of explicit indications to the CRNC to trigger fallback to R99 PRACH or to return to Enhanced CELL_FACH, the Node-B may be configured in some embodiments to notify the CRNC that a certain event has been set-off, or that a certain threshold has been reached. This approach allows the CRNC to have more control over when and how fallback to R99 PRACH is actually executed.

In a variant of the above approach, in some embodiments the CRNC can monitor the related resource consumption in terms of Node B hardware or logical resources reported by Node B. In these embodiments, the RNC then triggers fallback to PRACH or return to Enhanced CELL_FACH at the condition it decides, rather than relying on an indication sent by the Node-B.

In the above-summarized techniques, the actual execution of the fallback to PRACH is commanded by the RNC. In some embodiments, instead of the fallback to PRACH being commanded by RNC, the Node B can execute the fallback to PRACH autonomously, based on conditions at the Node B. This can be done using the Acquisition Indicator Channel (AICH), in some cases. In some of these embodiments, the CRNC uses lub signaling to send to the Node B a pre-configuration of fallback to PRACH, the pre-configuration establishing the data to be transmitted by the Node-B to execute the fallback. This pre-configuration is stored by Node B. When a condition is met and Node B decides to fall back to PRACH or return to Enhanced CELL_FACH, it will use the pre-configuration.

While various embodiments of the invention are described in the context of 3GPP's UMTS, it will be appreciated that the techniques and apparatus described herein are more generally applicable. Thus, for example, embodiments of the present invention include various methods for selectively switching between one of two (or more) random access modes, i.e., for aiding the selective use of two (or more) random access modes, where the Enhanced CELL_FACH and R99 PRACH are simply examples of these random access modes.

Several of these methods are suitable for implementation in a base station, such as a UTRAN Node-B. An example of these methods includes the receiving of configuration data from a controlling network node, such as a UTRAN RNC, the configuration data including one or more parameters that define (at least in part) a condition for triggering a change in random access mode, such as a change from Enhanced CELL_FACH to R99 PRACH. The configuration data can include one or more thresholds, for example, which are related to Node-B resources in some embodiments. The configuration data may also include one or more time-to-trigger values.

These methods continue with the monitoring, by the base station, of one or more resource-related conditions and the detecting of an event for triggering a change in random access mode, based on the configuration data received from the controlling network node. In some embodiments, the method continues with the sending of a trigger message to the controlling network node, in response to said detecting, the trigger message indicating that a change in random access mode is needed. In other embodiments, the base station continues by executing a change in random access mode by the base station, in response to said detecting, using an AICH to indicate the change to a mobile terminal.

Other embodiments of the present invention include methods carried out by a controlling network node, such as a UTRAN RNC. Some of these methods complement the base station methods described above. Thus, for example, one example method includes sending configuration data to a base station, such as a UTRAN Node-B, the configuration data including one or more parameters that define (at least in part) a condition for triggering a change in random access mode, such as a change from Enhanced CELL_FACH to R99 PRACH. Again, the configuration data can include one or more thresholds, for example, related to Node-B resources in some embodiments. The configuration data may also include one or more time-to-trigger values.

These methods continue with the receiving of a trigger message from the base station, the trigger message indicating that a change in random access mode is needed, based on the configuration data sent earlier. The controlling network node then carries out the change in random access mode.

In another example method carried out by a controlling network node, the network node monitors one or more resource-related parameters corresponding to one or more cells or base stations, such as Node-Bs in a UTRAN system. The method continues with the detecting of an event for triggering a change in random access mode at one or more of the cells and/or base stations, where such event is based on an earlier configuration of the network node. In some embodiments, the method continues with the sending of a system message to one or more base stations, the system message including system information data for transmission by the base station to one or more mobile terminals, wherein the system information data indicates, directly or indirectly, a change in random access mode.

It will be appreciated that several embodiments of the present invention may be implemented by adapting previously existing base stations and/or network nodes, said adapting to include the addition of support for one or more signaling messages and the addition of a monitoring function to monitor and evaluate one or more resource-related parameters. Accordingly, corresponding base station apparatus and network node apparatus are also described herein; in several of these embodiments, processing circuits and/or software are modified to implement one or more of the techniques summarized above and/or variants thereof.

Of course, the present invention is not limited to the above-summarized features and advantages. Indeed, those skilled in the art will recognize additional features and advantages upon reading the following detailed description, and upon viewing the accompanying drawings.

### BRIEF DESCRIPTION OF DRAWINGS

Figure 1 illustrates a wireless network including a base station and a radio network controller configured according to the present invention.
Figure 2 is a signal flow diagram illustrating some aspects of the present invention.
Figure 3 is a signal flow diagram according to some embodiments of the present invention.
Figure 4 is a signal flow diagram according to other embodiments of the present invention.
Figure 5 is a signal flow diagram according to still other embodiments of the present invention.
Figure 6 is a process flow diagram illustrating an example method as implemented in a base station.
Figure 7 is a process flow diagram illustrating another example method as implemented in a base station.
Figure 8 is a process flow diagram illustrating an example method as implemented in a network controller.
Figure 9 is a process flow diagram illustrating another example method as implemented in a network controller.
Figure 10 is a block diagram illustrating components of an example base station, according to several embodiments of the invention.
Figure 11 is a block diagram illustrating functional elements of an example network controller.

### DETAILED DESCRIPTION

In the discussion that follows, specific details of particular embodiments of the present invention are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not obscure the description with unnecessary detail. Those skilled in the art will appreciate that the functions described may be implemented in one or in several nodes. Some or all of the functions described may be implemented using hardware circuitry, such as analog and/or discrete logic gates interconnected to perform a specialized function, ASICs, PLAs, etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations of the present invention may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

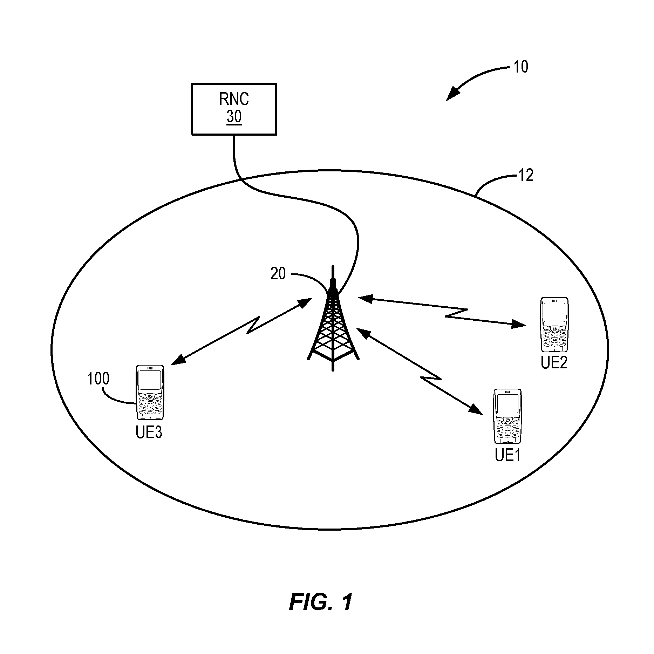

Referring now to the drawings, Figure 1 illustrates an exemplary mobile communication network 10 for providing wireless communication services to mobile terminals 100. Three mobile terminals 100, which are referred to as "user equipment" or "UE" in 3GPP terminology, are shown in Figure 1. The mobile terminals 100 may comprise, for example, cellular telephones, personal digital assistants, smart phones, laptop computers, handheld computers, or other devices with wireless communication capabilities. It should be noted that the term "mobile terminal," as used herein, refers to a terminal operating in a mobile communication network and does not necessarily imply that the terminal itself is mobile or moveable. Thus, the term may refer to terminals that are installed in fixed configurations, such as in certain machine-to-machine applications, as well as to portable devices, devices installed in motor vehicles, etc.

The mobile communication network 10 comprises a plurality of geographic cell areas or sectors 12. Each geographic cell area or sector 12 is served by a base station 20, which is referred to in the UTRAN context as a NodeB. One base station 20 may provide service in multiple geographic cell areas or sectors 12. The mobile terminals 100 receive signals from base station 20 on one or more downlink (DL) channels, and transmit signals to the base station 20 on one or more uplink (UL) channels.

Base station 20 is connected to a Radio Network Controller (RNC) 30, which in turn is connected to the core network via a both a circuit-switched interface (known as the lu-CS interface) and a packet-switched interface (known as the lu-PS interface). Among other things, the RNC 30 controls one or several Node B's, performing radio resource management and mobility management functions.

For illustrative purposes, several embodiments of the present invention will be described in the context of a UTRAN system. Those skilled in the art will appreciate, however, that several embodiments of the present invention may be more generally applicable to other wireless communication systems.

For a cell that supports Enhanced Uplink in CELL_FACH and Idle mode, there are situations where it would be preferred that the UTRAN sets up the Enhanced CELL_FACH capable users to use R99 PRACH instead of using the common E-DCH. In other words, there are cases where it would be desirable for the UTRAN to selectively steer uplink traffic over E-DCH or over PRACH. For example, the UTRAN might prefer to route uplink traffic over PRACH in case of a hardware resource shortage or congestion, or because operator policies. In situations where the base station is highly loaded, for instance, UEs may experience long delays before being able to transmit on E-DCH. When the UTRAN base station (referred to as a "Node-B" or "NB" in 3GPP terminology) grants a UE access to the UTRAN and permission to transmit data, the Node-B assigns an E-DCH resource (also called common E-DCH resource) to the UE. Busy times may cause excessive delays before a UE in Idle Mode or in CELL_FACH state in Connected Mode is able to transmit uplink data. This will be especially noticeable for those UEs that are trying to establish a voice call.

In these conditions, it is desirable for the UTRAN to have the ability to steer the UL traffic to RACH or E-DCH in dynamic fashion, discriminating between the different types of channels. For example, if common E-DCH resources are highly loaded, the UTRAN may want to receive higher priority data, such as signaling, on PRACH, at least in the event that it is less loaded than the common E-DCH resources.

Currently, to steer the traffic to PRACH the UTRAN has to remove the configuration from the system information. This implies that once this is done, the UTRAN needs to page all the UEs so that they acquire the new updated system information. Then, all new transmissions will start in PRACH. However, this approach will create peaks and will move the load in waves from the common E-DCH resources to the PRACH resources.

Therefore, it is more suitable to be able to steer the traffic in a controlled manner. For this, the RNC needs to have information of the load situation in the Node-B. "Load," as the term is used herein, can be understood to mean the number of UEs in CELL_FACH state, for instance, or the amount of occupied/freed common E-DCH resources in the Node-B, or the amount of occupied/free hardware resources in the Node-B.

In some embodiments, one or more of the following processes/steps/mechanisms are used. First, an indicator is introduced so that a Node B can indicate to other network nodes whether each of the Node B's cells is capable of supporting a new feature: Enhanced CELL_FACH fallback to R99 PRACH functionality. This functionality is referred to as "fallback to PRACH" in the following discussion. Next, signaling support for the Controlling RNC (CRNC) to set up "Events" is added. This signaling is done over the lub interface in UTRAN. An Event is a defined set of one or more parameters, such as threshold values and time-to-trigger values. When a certain condition remains true (for example, a certain value which is being monitored becomes and remains above/below the signaled threshold) for a period of time (time-to-trigger), the Node-B triggers an Event. The configured thresholds may refer to the load of UEs in a concrete Mode or State, the occupied/available common E-DCH resources, the occupied/available PRACH resources. Alternatively, this could be done via Node B configuration. In addition, new lub signaling is introduced to allow the Node B to notify the CRNC to trigger Enhanced CELL_FACH to fall back to R99 PRACH. This notification occurs when a configured Event is triggered.

Likewise, new lub signaling is introduced so that the Node B can notify the CRNC to return to Enhanced CELL_FACH, after having been earlier triggered to fall back to R99 PRACH. Note that instead of explicit indications to the CRNC to trigger fallback to R99 PRACH or to return to Enhanced CELL_FACH, in some embodiments the Node-B may be configured to notify the CRNC that a certain event has been set off, or that a certain threshold has been reached. This approach allows the CRNC to have more control over when and how fallback to R99 PRACH is actually executed.

In a variant of the above approach, in some embodiments the CRNC can monitor the related resource consumption in terms of Node B hardware or logical resources reported by Node B. In these embodiments, the RNC then triggers fallback to PRACH or return to Enhanced CELL_FACH at the condition it decides, rather than relying on an indication sent by the Node-B.

In the above-described techniques, the actual execution of the fallback to PRACH is commanded by the RNC. In some embodiments, instead of the fallback to PRACH being commanded by RNC, the Node B can execute the fallback to PRACH autonomously, based on conditions at the Node B. In some of these embodiments, the CRNC uses lub signaling to send to the Node B the pre-configuration of fallback to PRACH, the pre-configuration establishing the data to be transmitted by the Node-B to execute the fallback. This pre-configuration is stored by Node B. When a condition is met and Node B decides to fall back to PRACH or return to Enhanced CELL_FACH, it will use the pre-configuration.

In some, but not all, of the above embodiments, new lub signaling support is introduced to allow the CRNC to trigger Enhanced CELL_FACH fallback to R99 PRACH, where new system information is carried. The system information is sent from the CRNC and broadcast by the Node B to the UEs. If triggered by RNC, the return to Enhanced CELL_FACH can be achieved by using the current existing procedure for configuring Enhanced CELL_FACH.

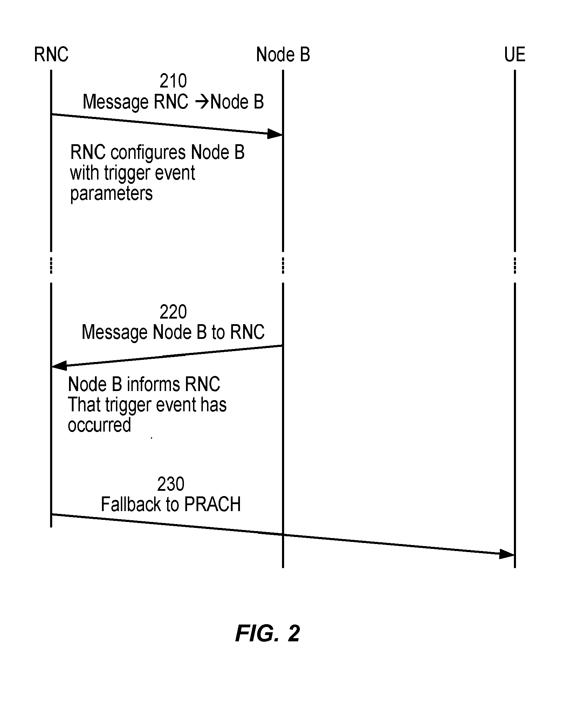

Figure 2 is a signal flow diagram depicting the basic approach according to several embodiments of the present invention. As shown at 210, the RNC configures the Node B with parameters for each of one or more events. These parameters may include, for example, thresholds related to the loading of the base station, and time_to_trigger values corresponding to one or more of these thresholds. The Node B subsequently monitors conditions and detects that a particular triggering event has occurred, e.g., that one of the configured thresholds has been reached for a period of time that equals or exceeds the corresponding time_to_trigger value. As shown at 220, the Node-B informs the RNC that the trigger event has occurred. In response, the RNC executes the fallback to PRACH, e.g., by causing dedicated signaling or broadcast information to be transmitted to the UE, as shown at 230, to indicate that certain transport channels should be carried on RACH, rather than on common E-DCH resources.

As discussed above, in various embodiments of the invention, the Enhanced CELL_FACH to R99 PRACH fallback may be triggered either by the controlling RNC (CRNC) or the Node B. There are several reasons to fall back to PRACH, such as uplink resource congestion detected in Node B, or traffic congestion/ rush-hour traffic situation detected by CRNC. The operators of the network could simply wish to configure the fallback to PRACH at certain time period, e.g., rush hours. When the fallback to PRACH condition is released, Enhanced CELL_FACH shall return to improve the end user performance.

Following is a discussion of several features that may be introduced to support the various approaches described above, and variants thereof. It should be appreciated that not all of these features are necessarily required for every embodiment of the invention. Furthermore, while the discussion of these features is directed to specifics of the UMTS system, and uses UMTS terminology, it will be appreciated by those skilled in the art that similar features may be developed for other wireless systems.
1. First, a capability is introduced for the Node B to indicate to the CRNC each cell's support of Fallback to PRACH functionality in the lub signaling. One way to do this in UTRAN is to add a new capability indictor in the existing information element (IE) ***Local Cell Information*** in the AUDIT RESPONSE message and RESOURCE STATUS INDICATION message. A Node B that has at least one cell which supports fallback to PRACH would support the RNC configuration, report to CRNC, and support the air interface change to UEs as described above.
2. A capability is introduced for the CRNC to set up a set of parameters such as threshold values and time-to-trigger values in Node B related to Fallback to PRACH, as well as threshold values and/or time-to-trigger values related to return to Enhanced CELL_FACH. The criteria defined by these sets of parameters are related to resources controlled by the Node B. When a certain condition is met (for example, a certain value which is being monitored becomes and remains above/below the signaled threshold) for a period of time (time-to-trigger), the Node-B triggers an Event. The configured thresholds may refer to the load of UEs in a concrete Mode or State, the occupied/available common E-DCH resources, the occupied/available PRACH resources, etc.
   In UTRAN, one example approach to setting up the threshold parameters is to add a new IE or new IE group in the existing COMMON TRANSPORT CHANNEL SETUP REQUEST/ COMMON TRANSPORT CHANNEL RECONFIGURATION REQUEST where the common channels are setup and reconfigured, or it could be done by adding a new IE or new IE group in PHYSICAL SHARED CHANNEL RECONFIGURATION REQUEST, where High-Speed Packet Access (HSPA) -related resources are configured. Another example is to introduce a new common measurement type, with the new threshold values. With this approach, new IEs and IE groups are introduced in the existing COMMON MEASUREMENT INITIATION REQUEST.
3. As noted earlier, in some embodiments the CRNC monitors the related resource consumption in Node B and triggers fallback to PRACH or return to Enhanced CELL_FACH, without relying on events explicitly triggered by the Node B. In some embodiments according to this approach, new resource consumption parameters to be reported by Node B are introduced and supported in extended lub signaling. An example of one way to do this is to introduce new IEs/ IE groups for the related resource consumption in RESOURCE STATUS INDICATION, which the Node B uses to notify CRNC the resource changes. One advantage to this approach is that each RNC can be configured differently, so that for the same condition some RNCs may trigger fallback to PRACH while others may not, for any of a variety of reasons.
4. If the Fallback to PRACH is initiated in the Node B, it would, when the threshold value for Fallback to PRACH or return to Enhanced CELL_FACH is reached, trigger an Event to indicate to the CRNC that a Fallback to PRACH/return to Enhanced CELL_FACH operation is needed. One example of a way to do this is to add a new indicator in RESOURCE STATUS INDICATION, which the Node B uses to notify CRNC of a resource change. Another example is, if COMMON MEASUREMENT INITIATION REQUEST is used as described in #2 above, then a new IE or IE group is introduced in the COMMON MEASUREMENT REPORT, for the Node B to use to indicate the Event.
5. As discussed earlier, instead of the fallback to PRACH being commanded by RNC, in some embodiments the Node B can execute the fallback to PRACH when conditions related to Node B are met. In some of these embodiments, the CRNC pre-configures the Node B on how to fall back to PRACH. One example of a way to do this in UTRAN is to add a new IE or new IE group for the pre-configuration of fallback to PRACH parameters (for example, preamble signature, etc.) in the existing PHYSICAL SHARED CHANNEL RECONFIGURATION REQUEST or in COMMON TRANSPORT CHANNEL SETUP REQUEST/ COMMON TRANSPORT CHANNEL RECONFIGURATION REQUEST, when the common channels are configured. This pre-configuration is stored in Node B but not immediately executed. When the condition is met for the Node B to fall back to PRACH, it then broadcasts the new system information defined by the pre-configuration. The Node B can also use the Acquisition Indicator Channel (AICH) to indicate to the UE that PRACH should be used. Node B shall store the configuration for Enhanced CELL_FACH procedure (if it was sent earlier by CRNC) and use it when Node B decides to return to Enhanced CELL_FACH.
6. When the CRNC decides to execute the operation of fallback to PRACH, it will instruct the Node B to broadcast the fallback to PRACH -related system information, for example, the preamble signature indicating a fallback to PRACH. The fallback to PRACH information is included in the lub signaling. One example way to do this is to add a new IE for fallback to PRACH configuration (for example, Preamble Signature, etc.) in PHYSICAL SHARED CHANNEL RECONFIGURATION REQUEST. If the CRNC decides to return to Enhanced CELL_FACH, it would use the existing procedure to setup on Enhanced CELL_FACH. A new IE may be introduced in PHYSICAL SHARED CHANNEL RECONFIGURATION REQUEST to indicate the fallback applies to all the cells supporting the fallback to PRACH function in the whole Node B. The Enhanced CELL_FACH capable users who support the fallback to PRACH could listen to the new SIB information and understand that they should use R99 PRACH when setting CELL_FACH.
7. The existing procedure for Enhanced CELL_FACH can be used when the UTRAN system decides to allow the Enhanced CELL_FACH users to set up on the common E-DCH again after fallback to PRACH.

Those skilled in the art will appreciate that, in all the above steps/techniques, when a new IE or IE group are introduced in the existing lub messages, the same function could also be performed by introducing new lub messages. Accordingly the new IE or IE groups discussed above are nonlimiting examples.

In summary, there are several alternative solutions that can be implemented using one or several of the preceding techniques. Four alternatives, based on various combinations of the features discussed in detail above, are shown in the following table, where the "X" indicates that a particular feature is included in a particular alternative. Note that the description of the features in the left-hand column is a brief description of the correspondingly numbered feature discussed in more detail above.

**Table 1**

| | Alternative 1 | Alternative 2 | Alternative 3 | Alternative 4 |
|---|---|---|---|---|
| 1: new cell capability from Node B to CRNC | X | X | X | X |
| 2: new Thresholds values from CRNC to Node B, or new common measurement type | | X | X | X |
| 3. define new resource for RNC to monitor in Node B | X | X | | |
| 4. Node B trigger Event, for Node B controlled resources | | | X | |
| 5. define new pre-configuration for Node B | | | | X |
| 6. Define new fallback SIB in lub from CRNC to Node B | X | X | X | X |
| 7. Return to Enhanced CELL_FACH | X | X | X | X |

As can be seen from the table above, one alternative solution (Alternative 1) uses features 1, 3, 6. These features define an embodiment in which the RNC monitors one or more resources related to the Node B and triggers a fallback to PRACH without requiring an explicit trigger message from the Node B. Another solution (Alternative 2) uses features 1, 2, 3, 6. These features define an embodiment in which the Node B triggers the fallback to PRACH, based on thresholds or system parameters sent to the Node B by the RNC. Threshold values according to feature 2 may define how the Node B to send resource state information (RSI), for example. Other alternative solutions in the table above include a combination of features 1, 2, 4, 6 (Alternative 3) and a combination of features 1, 2, 5, 6 (Alternative 4). In all the above alternative solutions, 1 and 6 are used when CRNC initiates fallback to PRACH without Node B resource consideration, for example, to fall back to PRACH at certain rush hours in the UTRAN network by operator policies. It will be appreciated however, that the table above is not an exhaustive representation of all possible solutions; other solutions, based on different combinations of the features discussed above and/or including additional features not referenced in the table, are possible.

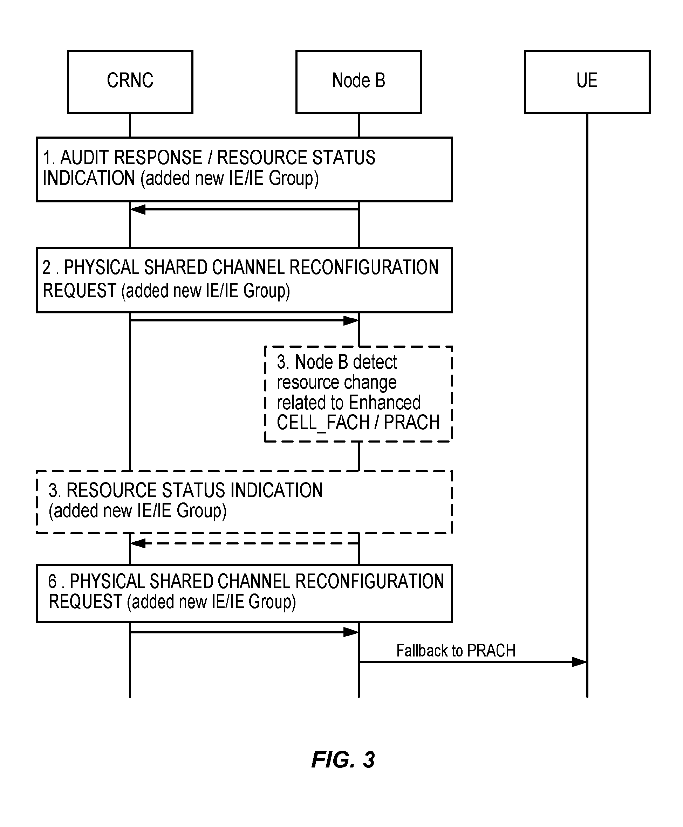

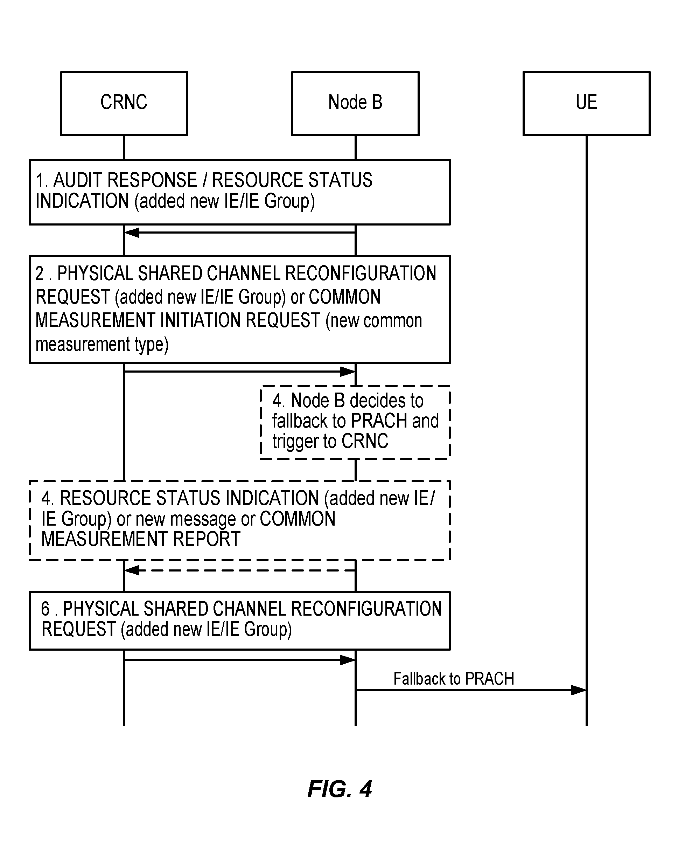

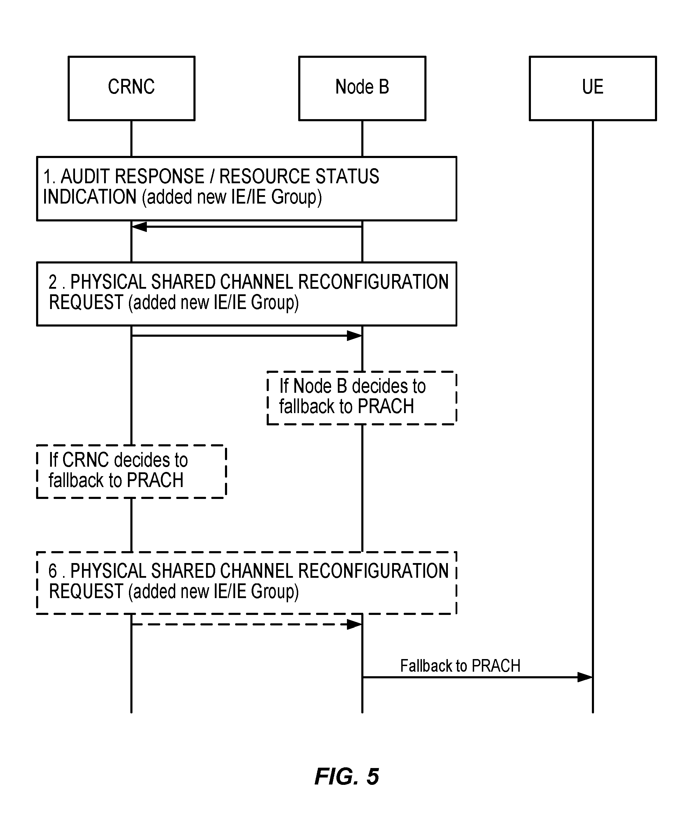

Figures 3, 4, and 5 illustrate examples of the communication among the RNC, the Node B, and the UE as detailed in several of the solutions described above. Figure 3 illustrates an example of Alternatives 1 and 2 from Table 1 above, which use features 1, 2 (optional - used in Alternative 2), 3, and 6 as described above. Figure 4 illustrates alternative solution 3 from Table 1 above, which uses features 1, 2, 4, 6. Figure 5 illustrates alternative solution 4 from the table above, which uses features 1, 2, 5, 6 as described earlier.

Node B Application Part (NBAP) signaling, which is the protocol used by an RNC to control a Node B in UTRAN, is defined by 3GPP TS 25.433, v.11.0 (December 2011; available at www.3gpp.org). This signaling can be modified to support several of the embodiments discussed above. In particular, the definition of Resource Status Indication (RSI), which is part of the NBAP signaling, can be modified. For instance, the new Fallback to PRACH capability indicator could be added under ***Local Cell Information***. The fallback to PRACH related resource consumption, for example uplink hardware resource, logic channel, etc., could be added under ***Local Cell Information*** or as a separate IE/IE group. Similar changes can apply to the AUDIT RESPONSE message in the NBAP signaling.

Similarly, the definition of the FDD Message PHYSICAL SHARED CHANNEL RECONFIGURATION REQUEST, which is defined in Section 9.1.62.1 of 3GPP TS 25.433, can be modified to support several of the embodiments discussed above. For example, a new IE group "Fallback to R99 PRACH" could be added to the end of this message. The new IE group could include, for example, Fallback to PRACH System Information, Fallback to PRACH Node B threshold values, Fallback to PRACH pre-configuration, or a flag to indicate the configuration is pre-configuration (see alternative solution 4).

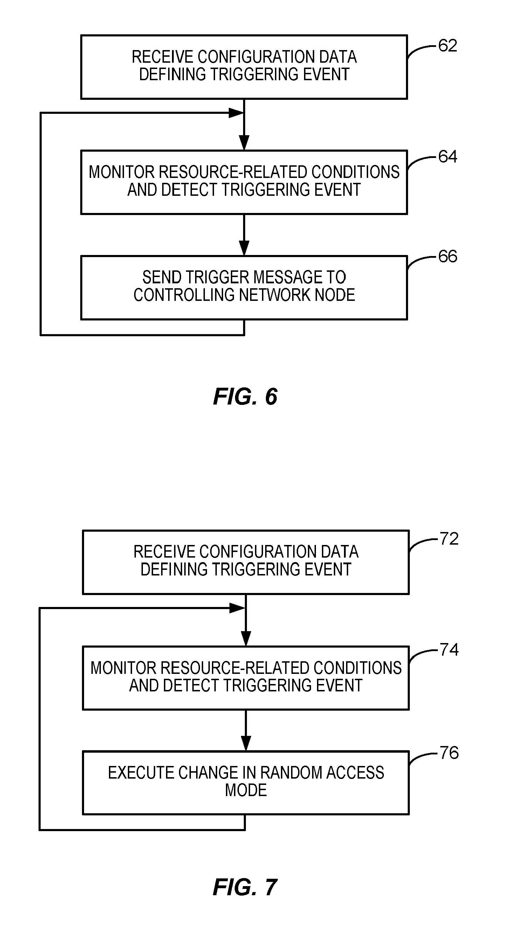

The process flow diagram of Figure 6 illustrates a generalized method for aiding the selective use of two or more random access modes according to several of the techniques described above. This method, which is suitable for implementation by a base station (e.g., a NodeB in a UMTS network), is applicable in a wireless network that supports an enhanced-uplink random-access procedure for accessing enhanced-uplink resources, as in the common E-DCH resources discussed above, and a fallback random-access procedure for access to fallback random-access resources, such as Release-99 RACH resources.

As shown at block 62, the method begins with receiving configuration data that includes one or more parameters defining a condition for triggering a change in random access mode. Next, as shown at block 64, the base station monitors one or more resource-related conditions and detects an event for triggering a change in random access mode, based on the configuration data. In response to detecting an event, the base station sends a trigger message to a controlling network node, as shown at block 66, the trigger message indicating that a change in random access mode is needed. In embodiments where the base station node is a Node B in a UTRAN, the configuration data may be received and the trigger message sent via a lub interface.

As discussed in detail above, the configuration data may comprise one or more thresholds for one or more of the resource-related conditions. These thresholds may include a first threshold value corresponding to occupied resources for a first random access mode and a second threshold value corresponding to available resources for the first random access mode, in some embodiments. In some cases, the configuration data may include one or more time-to-trigger values for one or more corresponding triggering events.

As discussed earlier, execution of the change in random access may be commanded by the controlling network node (e.g., a controlling RNC or executed autonomously by the base station. In one example of the former, the controlling network node causes the base station to broadcast data to signal the change to mobile terminals. Accordingly, in some embodiments the method illustrated in Figure 6 may further include transmitting system information data to one or more mobile terminals, the system information data indicating a change in random access mode. This transmitting may be preceded, in some cases, by receiving the system information data from the controlling network node, in response to said trigger message.

The process flow diagram of Figure 7 illustrates another generalized method for aiding the selective use of two or more random access modes. This method is also suitable for implementation by a base station in a wireless network that supports an enhanced-uplink random-access procedure for accessing enhanced-uplink resources, as in the common E-DCH resources discussed above, and a fallback random-access procedure for access to fallback random-access resources, such as Release-99 RACH resources.

As shown at block 72, the method begins in the same way as the method illustrated in Figure 6, i.e., with the receiving of configuration data that includes one or more parameters defining a condition for triggering a change in random access mode. Next, as shown at block 74, the base station monitors one or more resource-related conditions and detects an event for triggering a change in random access mode, based on the configuration data. In this example process, however, the base station executes a change in random access mode, in response to said detecting, using an Acquisition Indicator Channel (AICH) to indicate the change to a mobile terminal. Note that in in the UTRAN context in particular, this change in random access mode comprises executing a fallback to a PRACH mode from an Enhanced CELL_FACH mode.

As was the case with the method illustrated in Figure 6, the configuration data may comprise one or more thresholds for one or more of the resource-related conditions. Again, these thresholds may include a first threshold value corresponding to occupied resources for a first random access mode and a second threshold value corresponding to available resources for the first random access mode, in some embodiments. In some cases, the configuration data may include one or more time-to-trigger values for one or more corresponding triggering events.

It should be noted that the techniques illustrated in Figures 6 and 7 are not mutually exclusive. In some cases, the base station may be configured to both send sends a trigger message to a controlling network node, the trigger message indicating that a change in random access mode is needed, and to execute the change in random access mode using the AICH.

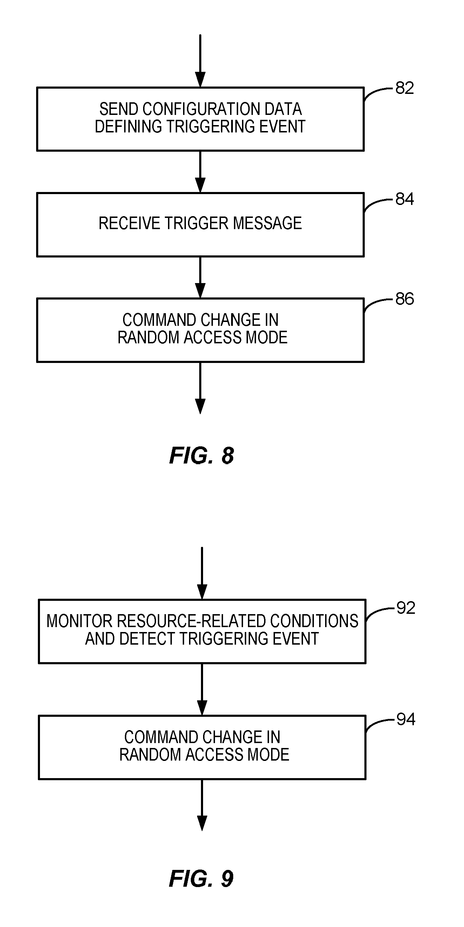

The process flow diagram of Figure 8 illustrates a method, implemented by a controlling node, which complements the technique illustrated in Figure 6. This controlling node can be an RNC in a UTRAN, for example, in which case the communications between the controlling node and a base station can be sent and received via a lub interface.

As shown at block 82, the method begins with sending, to a base station node, configuration data that includes one or more parameters defining a condition for triggering a change in random access mode. As noted earlier, the configuration data may comprise one or more thresholds for one or more of the resource-related conditions, such as a first threshold value corresponding to occupied resources for a first random access mode and a second threshold value corresponding to available resources for the first random access mode, in some embodiments. In some cases, the configuration data may include one or more time-to-trigger values for one or more corresponding triggering events.

The illustrated method continues, as shown at block 84, with receiving a trigger message from the base station node, the trigger message indicating that a change in random access mode is needed. In some cases, as shown at block 86, the method continues with commanding a change in random access mode.

In the method illustrated in Figure 8, the monitoring of resources is carried out by the base station, which informs the controlling node of resource-related events. Figure 9 illustrates a variant of this approach, in which the monitoring of resource-related conditions is carried out by the controlling network node. Thus, Figure 9 illustrates an example of a method, in a controlling node of a wireless network, for aiding the selective use of two or more random access modes, where the method includes, as shown at block 92 monitoring one or more resource-related conditions corresponding to a base station node and detecting an event for triggering a change in random access mode, based on the resource-related conditions. As shown at block 94, the controlling network node then commands a change in random access mode. As in the previously described methods, the monitoring may be based on one or more thresholds for one or more of the resource-related conditions, which thresholds may include a first threshold value corresponding to occupied resources for a first random access mode and a second threshold value corresponding to available resources for the first random access mode.

Although the solutions described above may be implemented in any appropriate type of telecommunication system supporting any suitable communication standards and using any suitable components, particular embodiments of the solutions described earlier may be implemented in an UTRAN network, such as that illustrated in Figure 1. The example network may further include any additional elements suitable to support communication between wireless devices or between a wireless device and another communication device (such as a landline telephone).

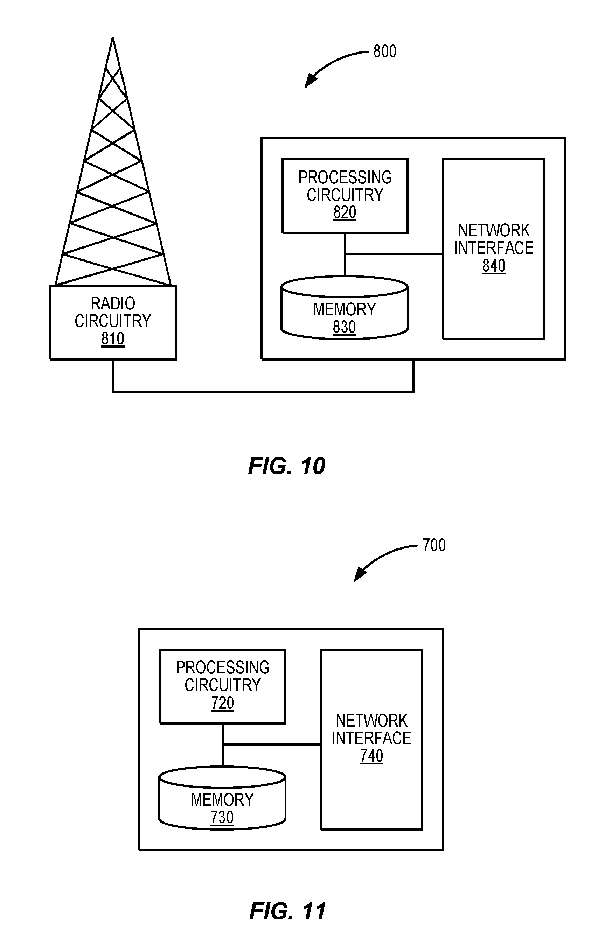

Various embodiments of the present invention are implemented in a network node, such as a base station (e.g., a UTRAN Node-B) or a controlling network node (e.g., a UTRAN RNC), or a combination of both. Figure 10 illustrates features of one example network node 800 adapted to carry out one or more of the techniques described above for facilitating a selective routing of random access uplink traffic between two random access mechanisms. Network node 800, which might be, for example, a UTRAN NodeB, includes processing circuitry 820, a memory 830, radio circuitry 810, and at least one antenna. The processing circuitry 820 may comprise additional RF circuitry and baseband processing circuitry (not shown). The radio circuitry 810 and any additional radio circuitry in processing circuitry 820 use known radio processing and signal processing components and techniques, typically according to a particular telecommunications standard such as the 3GPP standards for Wideband CDMA (W-CDMA) and High-Speed Packet Access (HSPA). Because the various details and engineering tradeoffs associated with the design and implementation of such circuitry are well known and are unnecessary to a full understanding of the invention, additional details are not shown here.

In particular embodiments, some or all of the functionality described above as being provided by a mobile base station, a base station controller, a relay node, a NodeB, an enhanced NodeB, and/or any other type of mobile communications node may be provided by the processing circuitry 820 executing instructions stored on a computer-readable medium, such as the memory 830 shown in Figure 10. Memory 830, which may comprise a data storage memory and a program storage memory, may be made up of one or several types of memory such as read-only memory (ROM), random-access memory, cache memory, flash memory devices, optical storage devices, etc. In some embodiments, for example, processing circuitry 820 is adapted (e.g., with program instructions stored in memory 830), to receive, via the network interface circuitry 840, configuration data that includes one or more parameters defining a condition for triggering a change in random access mode and to monitor one or more resource-related conditions and detect an event for triggering a change in random access mode, based on the configuration data. In some embodiments, the processing circuitry 820 is further adapted to send a trigger message to a controlling network node in response to the detection of the trigger event, using the network interface circuitry 840, the trigger message indicating that a change in random access mode is needed. In some of these and in some other embodiments, the processing circuitry 820 is further adapted to execute a change in random access mode, in response to detecting the trigger event, using an Acquisition Indicator Channel (AICH) to indicate the change to a mobile terminal.

Alternative embodiments of the network node 800 may include additional components responsible for providing additional functionality, including any of the functionality identified above and/or any functionality necessary to support the solution described above. Network node 800 also includes a network interface circuit 840, which is adapted to communicate with other elements of the wireless network, such as a UTRAN RNC, according to one or more of well-known specifications for network communication. This communication may include, in various embodiments of the present invention, signaling that is adapted according to one or more of the techniques described above, to support the selective routing of random access uplink traffic between two random access mechanisms.

Figure 11 illustrates features of another network node 700, adapted to carry out one or more of the techniques described above for facilitating a selective routing of random access uplink traffic between two random access mechanisms. Network node 700, which might be, for example, a UTRAN RNC, includes processing circuitry 720 and a memory 730. The processing circuitry 720 may include baseband processing circuitry (not shown), for signaling with other network nodes, sending and receiving configuration information, and the like. In particular embodiments, some or all of the functionality described above as being provided by a Radio Network Controller may be provided by the processing circuitry 720 executing instructions stored on a computer-readable medium, such as the memory 730 shown in Figure 11. In some embodiments, for example, processing circuitry 720 is adapted (e.g., with program instructions stored in memory 730), to send, to at least one base station node, configuration data that includes one or more parameters defining a condition for triggering a change in random access mode, and to receive a trigger message from a first one of the base station nodes, the trigger message indicating that a change in random access mode is needed. In some of these and in some other embodiments, processing circuitry 720 may be adapted to monitor one or more resource-related conditions corresponding to a first one of the base station nodes and detect an event for triggering a change in random access mode, based on the resource-related conditions. In response to the detected triggering event, the processing circuitry 720 then commands a change in random access mode.

Alternative embodiments of the network node 700 may include additional components responsible for providing additional functionality, including any of the functionality identified above and/or any functionality necessary to support the solution described above. Network node 700 also includes a network interface circuit 740, which is adapted to communicate with other elements of the wireless network, such as one or more UTRAN NodeBs, according to one or more of well-known specifications for network communication. This communication may include, in various embodiments of the present invention, signaling that is adapted according to one or more of the techniques described above, to support the selective routing of random access uplink traffic between two random access mechanisms.

Accordingly, in various embodiments of the invention, processing circuits, such as the processing circuit 820 in Figure 10 and the processing circuit 720 in Figure 11, are configured to carry out one or more of the techniques described in detail above. Likewise, other embodiments include base station nodes and controlling network nodes for use in a wireless network, the base station nodes and controlling network nodes including one or more such processing circuits. In some cases, these processing circuits are configured with appropriate program code, stored in one or more suitable memory devices, to implement one or more of the techniques described herein. Of course, it will be appreciated that not all of the steps of these techniques are necessarily performed in a single microprocessor or even in a single module.

Examples of several embodiments of the present invention have been described in detail above, with reference to the attached illustrations of specific embodiments. Because it is not possible, of course, to describe every conceivable combination of components or techniques, those skilled in the art will appreciate that the present invention can be implemented in other ways than those specifically set forth herein, without departing from essential characteristics of the invention.

When any of the words "comprise," "comprising," "include," or "including" is used herein, it shall be interpreted as non- limiting, i.e., meaning "consist at least of". The present invention is not limited to the above-described preferred embodiments. Various alternatives, modifications and equivalents may be used. Therefore, the above specific embodiments should not be taken as limiting the scope of the invention.

Modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation. The present embodiments are thus to be considered in all respects as illustrative and not restrictive.

## Claims

1. A method, in a base station node of a wireless network, for aiding the selective use of two or more random access modes, wherein the method comprises:
receiving (62) configuration data that includes one or more parameters defining a condition for triggering a change in random access mode;
monitoring (64) one or more resource-related conditions and detecting an event for triggering the change in random access mode, based on the configuration data; and
sending (66) a trigger message to a controlling network node in response to said detecting, the trigger message indicating that the change in random access mode is needed.

2. The method of claim 1, further comprising transmitting system information data to one or more mobile terminals, the system information data indicating the change in random access mode.

3. The method of any of claims 1-2, further comprising executing r the change in random access mode, in response to said detecting, using an Acquisition Indicator Channel, AICH, to indicate the change to a mobile terminal.

4. A method, in a base station node of a wireless network, for aiding the selective use of two or more random access modes, wherein the method comprises:
receiving (72) configuration data that includes one or more parameters defining a condition for triggering a change in random access mode;
monitoring (74) one or more resource-related conditions and detecting an event for triggering the change in random access mode, based on the configuration data; and
executing (76) a change in random access mode, in response to said detecting, using an Acquisition Indicator Channel, AICH, to indicate the change to a mobile terminal.

5. A method, in a controlling node of a wireless network, for aiding the selective use of two or more random access modes, wherein the method comprises:
sending (82), to a base station node, configuration data that includes one or more parameters defining a condition for triggering a change in random access mode; and
receiving (84) a trigger message from the base station node, the trigger message indicating that a change in random access mode is needed.

6. The method of claim 5, further comprising commanding (86) the change in random access mode.

7. The method of claim 5, further comprising, in response to the trigger message, sending system information data to the base station node for transmission to one or more mobile terminals, the system information data indicating the change in random access mode.

8. A base station node (800) for use in a wireless network, comprising:
radio circuitry (810) adapted for radio communication with one or more mobile terminals;
network interface circuitry (840) adapted for communication with a controlling network node; and
processing circuitry (820) adapted to control the radio circuitry and the network interface circuitry, **characterized in that** the processing circuitry (820) is further adapted to:
receive, via the network interface circuitry (840), configuration data that includes one or more parameters defining a condition for triggering a change in random access mode;
monitor one or more resource-related conditions and detect an event for triggering the change in random access mode, based on the configuration data; and
send a trigger message to a controlling network node in response to said detecting, using the network interface circuitry (840), the trigger message indicating that the change in random access mode is needed.

9. The base station node (800) of claim 8, wherein said configuration data comprises one or more thresholds for one or more of the resource-related conditions.

10. The base station node (800) of claim 9 wherein said one or more thresholds comprise at least one of a first threshold value corresponding to occupied resources for a first random access mode and a second threshold value corresponding to available resources for the first random access mode.

11. A base station node (800) for use in a wireless network, comprising:
radio circuitry (810) adapted for radio communication with one or more mobile terminals;
network interface circuitry (840) adapted for communication with a controlling network node; and
processing circuitry (820) adapted to control the radio circuitry and the network interface circuitry, **characterized in that** the processing circuitry (820) is further adapted to:
receive configuration data that includes one or more parameters defining a condition for triggering a change in random access mode;
monitor one or more resource-related conditions and detect an event for triggering the change in random access mode, based on the configuration data; and
execute a change in random access mode, in response to said detecting, using an Acquisition Indicator Channel, AICH, to indicate the change to a mobile terminal.

12. The base station node (800) of claim 11, wherein the processing circuitry (820) is adapted to execute a fallback to a Physical Random Access Channel, PRACH, mode from an Enhanced CELL_FACH mode.

13. The base station node (800) of claim 11 or 12, wherein said configuration data comprises one or more thresholds for one or more of the resource-related conditions.

14. A controlling node (700) for use in a wireless network, comprising:
network interface circuitry (740) adapted for communication with one or more base station nodes; and
processing circuitry (720) adapted to control the network interface circuitry, **characterized in that** the processing circuitry (720) is further adapted to to:
send, to at least one of the base station nodes, configuration data that includes one or more parameters defining a condition for triggering a change in random access mode; and
receive a trigger message from a first one of the base station nodes, the trigger message indicating that the change in random access mode is needed.

15. The controlling node (700) of claim 14, wherein the processing circuitry (720) is further adapted to, in response to the detected triggering event, command the change in random access mode.

## Patentansprüche

1. Verfahren in einem Basisstationsknoten eines drahtlosen Netzwerks zum Unterstützen der wahlweisen Verwendung von zwei oder mehr Direktzugriffsbetriebsarten, worin das Verfahren umfasst:
Empfangen (62) von Konfigurationsdaten, die einen oder mehrere Parameter einschließen, die eine Bedingung zum Auslösen eines Wechsels der Direktzugriffsbetriebsart definieren;
Überwachen (64) einer oder mehrerer ressourcenbezogener Bedingungen und Ermitteln eines Ereignisses zum Auslösen des Wechsels der Direktzugriffsbetriebsart auf der Grundlage der Konfigurationsdaten; und
als Antwort auf das Ermitteln erfolgendes Senden (66) einer Auslösernachricht an einen Netzwerksteuerknoten, wobei die Auslösernachricht darauf hinweist, dass der Wechsel der Direktzugriffsbetriebsart nötig ist.

2. Verfahren nach Anspruch 1, ferner umfassend: Übertragen von Systeminformationsdaten zu einem oder mehreren mobilen Endgeräten, wobei die Systeminformationsdaten auf den Wechsel der Direktzugriffsbetriebsart hinweisen.

3. Verfahren nach einem der Ansprüche 1 bis 2, ferner umfassend: als Antwort auf das Ermitteln erfolgendes Ausführen des Wechsels der Direktzugriffsbetriebsart, wobei ein Erfassungshinweiskanal, AICH, verwendet wird, um ein mobiles Endgerät auf den Wechsel hinzuweisen.

4. Verfahren in einem Basisstationsknoten eines drahtlosen Netzwerks zum Unterstützen der wahlweisen Verwendung von zwei oder mehr Direktzugriffsbetriebsarten, worin das Verfahren umfasst:
Empfangen (72) von Konfigurationsdaten, die einen oder mehrere Parameter einschließen, die eine Bedingung zum Auslösen eines Wechsels der Direktzugriffsbetriebsart definieren;
Überwachen (74) einer oder mehrerer ressourcenbezogener Bedingungen und Ermitteln eines Ereignisses zum Auslösen des Wechsels der Direktzugriffsbetriebsart auf der Grundlage der Konfigurationsdaten; und
Ausführen (76) eines Wechsels der Direktzugriffsbetriebsart als Antwort auf das Ermitteln, wobei ein Erfassungshinweiskanal, AICH, verwendet wird, um ein mobiles Endgerät auf den Wechsel hinzuweisen.

5. Verfahren in einem Steuerknoten eines drahtlosen Netzwerks zum Unterstützen der wahlweisen Verwendung von zwei oder mehr Direktzugriffsbetriebsarten, worin das Verfahren umfasst:
Senden (82) von Konfigurationsdaten an einen Basisstationsknoten, die einen oder mehrere Parameter einschließen, die eine Bedingung zum Auslösen eines Wechsels der Direktzugriffsbetriebsart definieren; und
Empfangen (84) einer Auslösernachricht vom Basisstationsknoten, wobei die Auslösernachricht darauf hinweist, dass ein Wechsel der Direktzugriffsbetriebsart nötig ist.

6. Verfahren nach Anspruch 5, ferner umfassend: Befehlen (86) des Wechsels der Direktzugriffsbetriebsart.

7. Verfahren nach Anspruch 5, ferner umfassend: als Antwort auf die Auslösernachricht erfolgendes Senden von Systeminformationsdaten an den Basisstationsknoten zur Übertragung zu einem oder mehreren mobilen Endgeräten, wobei die Systeminformationsdaten auf den Wechsel der Direktzugriffsbetriebsart hinweisen.

8. Basisstationsknoten (800) zur Verwendung in einem drahtlosen Netzwerk, umfassend:
eine Funkschaltung (810), die für die Funkkommunikation mit einem oder mehreren mobilen Endgeräten eingerichtet ist;
eine Netzwerkschnittstellenschaltung (840), die für die Kommunikation mit einem Netzwerksteuerknoten eingerichtet ist; und
eine Verarbeitungsschaltung (820), die dafür eingerichtet ist, die Funkschaltung und die Netzwerkschnittstellenschaltung zu steuern, **dadurch gekennzeichnet, dass** die Verarbeitungsschaltung (820) ferner dafür eingerichtet ist:
über die Netzwerkschnittstellenschaltung (840) Konfigurationsdaten zu empfangen, die einen oder mehrere Parameter einschließen, die eine Bedingung zum Auslösen eines Wechsels der Direktzugriffsbetriebsart definieren;
auf der Grundlage der Konfigurationsdaten eine oder mehrere ressourcenbezogene Bedingungen zu überwachen und ein Ereignis zum Auslösen des Wechsels der Direktzugriffsbetriebsart zu ermitteln; und
als Antwort auf das Ermitteln unter Verwendung der Netzwerkschnittstellenschaltung (840) eine Auslösernachricht an einen Netzwerksteuerknoten zu senden, wobei die Auslösernachricht darauf hinweist, dass der Wechsel der Direktzugriffsbetriebsart nötig ist.

9. Basisstationsknoten (800) nach Anspruch 8, worin die Konfigurationsdaten einen oder mehrere Schwellwerte für eine oder mehrere der ressourcenbezogenen Bedingungen umfassen.

10. Basisstationsknoten (800) nach Anspruch 9, worin der eine oder die mehreren Schwellwerte mindestens eines von Folgendem umfassen: ein erster Schwellwert, der belegten Ressourcen für eine erste Direktzugriffsbetriebsart entspricht, und ein zweiter Schwellwert, der verfügbaren Ressourcen für die erste Direktzugriffsbetriebsart entspricht.

11. Basisstationsknoten (800) zur Verwendung in einem drahtlosen Netzwerk, umfassend:
eine Funkschaltung (810), die für die Funkkommunikation mit einem oder mehreren mobilen Endgeräten eingerichtet ist;
eine Netzwerkschnittstellenschaltung (840), die für die Kommunikation mit einem Netzwerksteuerknoten eingerichtet ist; und
eine Verarbeitungsschaltung (820), die dafür eingerichtet ist, die Funkschaltung und die Netzwerkschnittstellenschaltung zu steuern, **dadurch gekennzeichnet, dass** die Verarbeitungsschaltung (820) ferner dafür eingerichtet ist:
Konfigurationsdaten zu empfangen, die einen oder mehrere Parameter einschließen, die eine Bedingung zum Auslösen eines Wechsels der Direktzugriffsbetriebsart definieren;
auf der Grundlage der Konfigurationsdaten eine oder mehrere ressourcenbezogene Bedingungen zu überwachen und ein Ereignis zum Auslösen des Wechsels der Direktzugriffsbetriebsart zu ermitteln; und
als Antwort auf das Ermitteln einen Wechsel der Direktzugriffsbetriebsart auszuführen, wobei ein Erfassungshinweiskanal, AICH, verwendet wird, um ein mobiles Endgerät auf den Wechsel hinzuweisen.

12. Basisstationsknoten (800) nach Anspruch 11, worin die Verarbeitungsschaltung (820) dafür eingerichtet ist, einen Rückgriff von einer Betriebsart mit dem verbesserten CELL_FACH auf eine Betriebsart mit dem physischen Direktzugriffkanal, PRACH, auszuführen.

13. Basisstationsknoten (800) nach Anspruch 11 oder 12, worin die Konfigurationsdaten einen oder mehrere Schwellwerte für eine oder mehrere der ressourcenbezogenen Bedingungen umfassen.

14. Steuerknoten (700) zur Verwendung in einem drahtlosen Netzwerk, umfassend:
eine Netzwerkschnittstellenschaltung (740), die für die Kommunikation mit einem oder mehreren Basisstationsknoten eingerichtet ist; und
eine Verarbeitungsschaltung (720), die dafür eingerichtet ist, die Netzwerkschnittstellenschaltung zu steuern, **dadurch gekennzeichnet, dass** die Verarbeitungsschaltung (720) ferner dafür eingerichtet ist:
an mindestens einen der Basisstationsknoten Konfigurationsdaten zu senden, die einen oder mehrere Parameter einschließen, die eine Bedingung zum Auslösen eines Wechsels der Direktzugriffsbetriebsart definieren; und
eine Auslösernachricht von einem ersten der Basisstationsknoten zu empfangen, wobei die Auslösernachricht darauf hinweist, dass der Wechsel der Direktzugriffsbetriebsart nötig ist.

15. Steuerknoten (700) nach Anspruch 14, worin die Verarbeitungsschaltung (720) ferner dafür eingerichtet ist, als Antwort auf das ermittelte auslösende Ereignis den Wechsel der Direktzugriffsbetriebsart zu befehlen.

## Revendications

1. Procédé, mis en oeuvre dans un noeud de station de base d'un réseau sans fil, d'assistance dans le cadre de l'utilisation sélective de deux modes d'accès aléatoires ou plus, dans lequel le procédé consiste à :
recevoir (62) des données de configuration qui incluent un ou plusieurs paramètres définissant un état nécessitant le déclenchement d'une modification de mode d'accès aléatoire ;
surveiller (64) un ou plusieurs états connexes à des ressources et détecter un événement nécessitant le déclenchement de la modification de mode d'accès aléatoire, sur la base des données de configuration ; et
envoyer (66) un message de déclenchement à un noeud de réseau de commande en réponse à ladite détection, le message de déclenchement indiquant que la modification de mode d'accès aléatoire est nécessaire.

2. Procédé selon la revendication 1, consistant en outre à transmettre des données d'informations de système à un ou plusieurs terminaux mobiles, les données d'informations de système indiquant la modification de mode d'accès aléatoire.

3. Procédé selon l'une quelconque des revendications 1 à 2, consistant en outre à exécuter la modification de mode d'accès aléatoire, en réponse à ladite détection, en utilisant un canal indicateur d'acquisition, AICH, en vue d'indiquer la modification à un terminal mobile.

4. Procédé, mis en oeuvre dans un noeud de station de base d'un réseau sans fil, d'assistance dans le cadre de l'utilisation sélective de deux modes d'accès aléatoires ou plus, dans lequel le procédé consiste à :
recevoir (72) des données de configuration qui incluent un ou plusieurs paramètres définissant un état nécessitant le déclenchement d'une modification de mode d'accès aléatoire ;
surveiller (74) un ou plusieurs états connexes à des ressources et détecter un événement nécessitant le déclenchement de la modification de mode d'accès aléatoire, sur la base des données de configuration ; et
exécuter (76) une modification de mode d'accès aléatoire, en réponse à ladite détection, en utilisant un canal indicateur d'acquisition, AICH, en vue d'indiquer la modification à un terminal mobile.

5. Procédé, mis en oeuvre dans un noeud de commande d'un réseau sans fil, d'assistance dans le cadre de l'utilisation sélective de deux modes d'accès aléatoires ou plus, dans lequel le procédé consiste à :
envoyer (82), à un noeud de station de base, des données de configuration qui incluent un ou plusieurs paramètres définissant un état nécessitant le déclenchement d'une modification de mode d'accès aléatoire ; et
recevoir (84) un message de déclenchement en provenance du noeud de station de base, le message de déclenchement indiquant qu'une modification de mode d'accès aléatoire est nécessaire.

6. Procédé selon la revendication 5, consistant en outre à commander (86) la modification de mode d'accès aléatoire.

7. Procédé selon la revendication 5, consistant en outre à, en réponse au message de déclenchement, envoyer des données d'informations de système au noeud de station de base en vue d'une transmission à un ou plusieurs terminaux mobiles, les données d'informations de système indiquant la modification de mode d'accès aléatoire.

8. Noeud de station de base (800) destiné à être utilisé dans un réseau sans fil, comprenant :
un montage de circuits radio (810) apte à une communication radio avec un ou plusieurs terminaux mobiles ;
un montage de circuits d'interface de réseau (840) apte à une communication avec un noeud de réseau de commande ; et
un montage de circuits de traitement (820) apte à commander le montage de circuits radio et le montage de circuits d'interface de réseau, **caractérisé en ce que** le montage de circuits de traitement (820) est en outre apte à :
recevoir, par l'intermédiaire du montage de circuits d'interface de réseau (840), des données de configuration qui incluent un ou plusieurs paramètres définissant un état nécessitant le déclenchement d'une modification de mode d'accès aléatoire ;
surveiller un ou plusieurs états connexes à des ressources et détecter un événement nécessitant le déclenchement de la modification de mode d'accès aléatoire, sur la base des données de configuration ; et
envoyer un message de déclenchement à un noeud de réseau de commande, en réponse à ladite détection, en utilisant le montage de circuits d'interface de réseau (840), le message de déclenchement indiquant que la modification de mode d'accès aléatoire est nécessaire.

9. Noeud de station de base (800) selon la revendication 8, dans lequel lesdites données de configuration comportent un ou plusieurs seuils pour un ou plusieurs des états connexes à des ressources.

10. Noeud de station de base (800) selon la revendication 9, dans lequel ledit un ou lesdits plusieurs seuils comprennent au moins l'une parmi une première valeur de seuil correspondant à des ressources occupées pour un premier mode d'accès aléatoire et une seconde valeur de seuil correspondant à des ressources disponibles pour le premier mode d'accès aléatoire.

11. Noeud de station de base (800) destiné à être utilisé dans un réseau sans fil, comprenant :
un montage de circuits radio (810) apte à une communication radio avec un ou plusieurs terminaux mobiles ;
un montage de circuits d'interface de réseau (840) apte à une communication avec un noeud de réseau de commande ; et
un montage de circuits de traitement (820) apte à commander le montage de circuits radio et le montage de circuits d'interface de réseau, **caractérisé en ce que** le montage de circuits de traitement (820) est en outre apte à :
recevoir des données de configuration qui incluent un ou plusieurs paramètres définissant un état nécessitant le déclenchement d'une modification de mode d'accès aléatoire ;
surveiller un ou plusieurs états connexes à des ressources et détecter un événement nécessitant le déclenchement de la modification de mode d'accès aléatoire, sur la base des données de configuration ; et
exécuter une modification de mode d'accès aléatoire, en réponse à ladite détection, en utilisant un canal indicateur d'acquisition, AICH, en vue d'indiquer la modification à un terminal mobile.

12. Noeud de station de base (800) selon la revendication 11, dans lequel le montage de circuits de traitement (820) est apte à exécuter une reprise d'un mode de canal d'accès aléatoire physique, PRACH, à partir d'un mode CELL_FACH amélioré.

13. Noeud de station de base (800) selon la revendication 11 ou 12, dans lequel lesdites données de configuration comportent un ou plusieurs seuils pour un ou plusieurs des états connexes à des ressources.

14. Noeud de commande (700) destiné à être utilisé dans un réseau sans fil, comprenant :
un montage de circuits d'interface de réseau (740) apte à une communication avec un ou plusieurs noeuds de station de base ; et
un montage de circuits de traitement (720) apte à commander le montage de circuits d'interface de réseau, **caractérisé en ce que** le montage de circuits de traitement (720) est en outre apte à :
envoyer, à au moins l'un des noeuds de station de base, des données de configuration qui incluent un ou plusieurs paramètres définissant un état nécessitant le déclenchement d'une modification de mode d'accès aléatoire ; et
recevoir un message de déclenchement, en provenance d'un premier des noeuds de station de base, le message de déclenchement indiquant que la modification de mode d'accès aléatoire est nécessaire.

15. Noeud de commande (700) selon la revendication 14, dans lequel le montage de circuits de traitement (720) est en outre apte à, en réponse à l'événement de déclenchement détecté, commander la modification de mode d'accès aléatoire.
